# EUROPEAN PATENT SPECIFICATION

(11) **EP 2 367 890 B1**
(45) Date of publication and mention of the grant of the patent: **01.07.2015**
(21) Application number: 09775484.0
(22) Date of filing: 16.12.2009
(51) Int. Cl.: C09C 1/36, B82Y 30/00, C09D 5/03

(54) **MODIFIED TITANIUM DIOXIDE COMPRISING AT LEAST ONE (METH)ACRYLIC POLYMER**
MODIFIZIERTES TITANDIOXID MIT MINDESTENS EINEM (METH)ACRYLPOLYMER
DIOXYDE DE TITANE MODIFIÉ COMPRENANT AU MOINS UN POLYMÈRE (MÉTH)ACRYLIQUE

(30) Priority: 18.12.2008 US 203071 P
(43) Date of publication of application: 28.09.2011
(73) Proprietor: Coatings Foreign IP Co. LLC, Wilmington, DE 19801 (US)
(72) Inventor: WILCZEK, Lech, Wilmington Delaware 19810 (US); MCINTYRE, Patrick, F., West Chester Pennsylvania 19302 (US); VISSCHER, Karyn, B., Morris Plains New Jersey 07950 (US); YOKOYAMA, Ayumu, Clarkston Michigan 48346 (US); DECKER, Owen, H., Idaho Falls Idaho 83404 (US)
(74) Representative: Maiwald Patentanwalts GmbH
(86) International application number: PCT/US2009/068199
(87) International publication number: WO 2010/080426

(56) References cited:
- EP-A2- 0 009 179
- WO-A2-03/010244
- PERSTORP UK, Ltd.: "Caprolactone in acrylic resins" 4 May 2003 (2003-05-04), XP002577711 Retrieved from the Internet: URL:http://perstorpcaprolactones.com/docro ot/capro/static_files/attachments/a.Caprol actone_in_Acrylic_Resins.pdf> [retrieved on 2010-04-14]
- F. L. DUIVENVOORDE, K. JANSEN, J. LAVEN, R. VAN DER LINDE: "Use of poly(2-vinylpyridine)-b-poly(epsilon-capro lactone) copolymers as pigment stabilizers in powder coatings", JOURNAL OF COATINGS TECHNOLOGY, vol. 74, no. 931, August 2002 (2002-08), pages 49-57,

## Description

### Field of the Invention

The invention is directed to modified encapsulated titanium dioxide providing improved enduse performances for several applications, particularly for coating and inkjet applications.

### Background of the Invention

Titanium dioxide materials obtained after chemical synthesis are generally unsuitable for use as pigments in end use applications, particularly coating applications. Consequently, the crude materials typically undergo one or more finishing steps that modify particle size, particle shape and distribution, surface characteristics, and/or crystal structure of the pigment in such a way that provides a pigment of good pigmentary quality. Most finishing processes also include various surface treatments and additives to make the titanium dioxide pigments easier to process and to improve durability. Crude titanium dioxide materials having undergone a pigment finishing process are also known as finished or conditioned pigments.

US 4177081 and US 5989331 disclose the milling of titanium dioxide with e.g. solvents, dispersants and/or resins to disperse the pigment and to achieve an acceptable product for various end use applications, such as coatings, inkjet inks, plastics, paper, and textile products.

WO 03/010244 refers to a method for conditioning titanium dioxide pigments with copolymer dispersants whereby the copolymer dispersants can be dispersible acrylic copolymers having pigment adsorbing segments as well as stabilizing segments, to improve the dispersibility in enduse applications containing such conditioning titanium dioxide.

It is known that pigments in coating compositions can be stabilized by polycaprolactone copolymers as dispersants, as disclosed in Journal of Coatings Technology, Vol. 74, No.931, 2002.

EP 0 009 179 describes homogeneous coating of a titanium dioxide pigment with an organic polymer in which an aqueous solution of a polymer containing carboxyl groups is added to a dispersion of titanium dioxide in water, the polymer is applied to the pigment, the coated pigment is separated off from the aqueous medium, washed, dried and, optionally ground.

WO 03/010244 relates to a process for preparing conditioned titanium dioxide pigments comprising (a) during pigment manufacture, admixing the following components to form a conditioned pigment: (1) a crude titanium dioxide pigment material; (2) at least about 0.1 % by weight, relative to the inorganic pigment, of one or more copolymer dispersants; and (3) an optional processing liquid (preferably water); and, (b) isolating the conditioned pigment as dry powder.

XP-00257771, PERSTORP UK, Ltd.: "Caproplactone in acrylic resins", Issue 4 May 2003 describes that epsilon-caprolactone is a high boiling liquid capable of reacting with resins containing hydroxyl groups, such as polyesters, epoxies and acrylics. Moreover, it is decribed that resins modified in this way can be used to prepare surface coatings, for stoving applications, which offer an outstanding combination of hardness and flexibility.

There is still a need to improve the finishing of titanium dioxide pigments, particularly to minimize or prevent agglomeration and make the pigment more useful in various end use applications, particularly in powder coating compositions.

### Summary of the Invention

The present invention provides a modified encapsulated titanium dioxide comprising an intimate mixture comprising
A) crude titanium dioxide, and
B) 0.1 to 10 wt% of at least one (meth)acrylic polymer, preferably a polycaprolactone based polymer,
   the wt% relative to the crude titanium dioxide wherein the (meth)acrylic polymer is a polycaprolactone based polymer.

The present invention provides a modified titanium dioxide which exhibits improved dispersibility, as well as improved appearance with regard to powder coatings for example, higher DOI (distinctness of image) which relates to reduced orange peel, lower haze and better flow as well as higher adhesion, impact resistance and durability of the coatings. The modified titanium dioxide of the present invention can be incorporated directly in enduse applications without the need for adding additional dispersant(s) to the formulation as is done with conventional pigment.

The term "crude titanium dioxide" as used herein refers to a titanium dioxide pigment that has been obtained after chemical synthesis and has not been treated with any finishing step. Such crude pigments may or may not be modified after chemical synthesis and may or may not have desirable coloristic properties in enduse systems.

The terms "titanium dioxide", "titanium dioxide pigment" and "titanium dioxide material" as used herein should be understood to have the same meaning.

The term "modified encapsulated titanium dioxide" as used herein refers to a titanium dioxide pigment that is modified according to the present invention after chemical synthesis of the crude titanium dioxide.

The term (meth)acrylate is respectively intended to mean acrylic and/or methacrylic.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

Slight variations above and below the various stated ranges can be used to achieve substantially the same results as values within the ranges. Also, the disclosure of these ranges is intended as a continuous range including every value between the minimum and maximum values.

All patents, patent applications and publications referred to herein are incorporated by reference in their entirety.

The modified encapsulated titanium dioxide of the present invention comprising an intimate mixture comprising A) a crude titanium dioxide, and B) 0.1 to 10 wt% of at least one (meth)acrylic polymer, preferably a polycaprolactone based polymer, the mixture is done at high temperature in a range from 100 to 400 °C, preferably 250 to 400 °C, more preferably 300 to 350 °C, resulting in encapsulation of the pigment by the polymer.

Generally, any type of crude titanium dioxide can be used as component A) in accordance with the present invention. The crude titanium dioxide can be used also with any other inorganic and/or organic pigment that can withstand the high temperature encapsulation process, for example, in a mixing ratio of the crude titanium dioxide to the other pigment(s) in a range of 5:95 to 95:5. Such other pigments can be, for example, zinc oxide, aluminium oxides, iron oxides and organic pigments. The starting crude titanium dioxide is preferably a crude dry, rutile titanium dioxide which has been formed from titanium tetrachloride using a vapor phase oxidation process commonly known as the chloride process. Typically, these materials may also contain small amounts of oxidized rutilizing agents, such as alumina, which are produced along with the titanium dioxide during the chloride process. This invention is not limited to titanium dioxide made using chloride process and could be applied to either rutile or anatase grades made using sulfate process known in the art.

The crude titanium dioxide can also be a pigmentary titanium dioxide material. Pigmentary titanium dioxide materials are characterized by mean particle sizes in the range of 100 to 500 nanometer (nm), preferably of 175 to 350 nm, based on the D50 mean particle size contribution measured by means known in the art.

Transparent titanium dioxide materials which are characterized by mean particle crystal sizes less than 100 nm, preferably less than 75 nm, preferably 30 to 70 nm, can also be used as the starting crude titanium dioxide.

The crude titanium dioxide useable for the present invention may or may not be modified after chemical synthesis. Typical modifications of the crude titanium dioxide include at least one inorganic hydrous oxide (e. g. alumina and/or silica) after treatments known in the art.

The at least one (meth)acrylic polymer of component B) of the present invention can be used in a total concentration of at least 0.1 wt%, typically 0.1 to 10 wt%, preferably 0.25 to 5 wt%, more preferably 0.5 to 1 wt%, relative to the crude titanium dioxide. The polymer should generally be used in amounts sufficient to adequately encapsulate the surface of the titanium dioxide particles.

The (meth)acrylic polymer of component B) can be introduced during various stages of a conventional crude titanium dioxide operation or after the final stage of the conventional operation but still during manufacture of the crude titanium dioxide, as described hereinafter.

(Meth)acrylic polymers are, polycaprolactone based polymers containing polycaprolactone, for example (meth)acrylic polymers based on Desmodur®N and hydroxyl polycaprolactone, also hyperbranched (high molecular weight) polymers containing polycaprolactone and/or SCT (special chain transfer) polymers containing polycaprolactone, known as such to those skilled in the art, for example having an average molecular weight Mn equal or higher than 3500 g/mol.

The crude titanium dioxide of component A) may be admixed with the at least one (meth)acrylic polymer of component B), followed by isolation of the resulted modified encapsulated titanium dioxide. Optionally, one or more additives and liquids may be used during admixing. The components of the admixture may be added or combined in any order, and the admixture is processed in such a way to enable encapsulation of the (meth)acrylic polymer around the particle surface of the titanium dioxide.

The liquids can act as a liquid carrier medium for the (meth)acrylic polymer of component B) and can be used, for example, in amounts of 10 to 50 wt%, preferably 20 to 30 wt%, the wt% based on the admixture being processed. Suitable liquids include, for example, water, lower aliphatic alcohols, ketones and ketoalcohols, amides, ethers, alkylene glycols and triols and other organic liquids known in the art; and mixtures thereof. Preferred is the use of water, which may or may not be supplied from the crude titanium dioxide synthesis.

Additives may be used before, during or after admixing, for example, processing aids, surface treatment additives and/or flocculants. The additives can be used in conventional quantities, such as 0.1 to 50 wt%, preferably 0.1 to 20 wt%, more preferably 0.1 to 5 wt%, the wt% relative to the titanium dioxide. Examples of suitable processing aids include surfactants, wetting agents, grinding aids, latices, dispersing agents, organic acids or diacids or mixtures thereof. Suitable inorganic surface treatment additives include metal salts (such as sodium aluminates, sodium silicates, or mixtures thereof). Suitable organic surface treatment additives include non-polymeric materials such as trimethylol propane or triethylene acetate, organic acids and bases and the like, as known in the art. Flocculants may be added to the resulting mixture to promote flocculation and thereby facilitate isolation as well as to improve the binding of the polymer to the pigment surface, for example, dilute mineral acids and/or organic acids. Bases may also be used depending on the surface characteristics of the pigment at the time of flocculation.

Suitable admixing methods include known wet milling or grinding methods, such as sand milling, bead milling, fluid energy milling, disc milling, and the like; known drying methods, such as spray drying, fluidized bed drying, tray drying, spin flash drying, and the like; and other known deposition for particulate materials, such as injector treating, 2-roll dry milling, and the like. These methods can be either encountered during the various stages of a conventional crude operation of the titanium dioxide or provided as an additional step in such an operation.

For example, the crude dry titanium dioxide of component A) can be conventionally processed by, in general, 1. dispersing the crude titanium dioxide in an aqueous medium; 2. optionally precipitating inorganic oxides, e.g. alumina and/or silica, on the particle surfaces of the dispersed titanium dioxide (optional treating step); 3. filtering and washing the optionally treated titanium dioxide material; 4. drying the washed product; 5. grinding the dried product to a desired size; 6. isolating the finished titanium dioxide pigment as dry powder, whereby the (meth)acrylic polymer of component B) can be introduced before, during or after one of these operation steps.

Another way to introduce the (meth)acrylic polymer of component B) is to add an extra finishing step to the above mentioned operation steps, such as a final treatment step. This final treatment step may entail taking dry pigment from the grinding step and then depositing the (meth)acrylic polymer thereon using, e.g. an injector treatment process, as such known in the art, for example, as described in US 4430001. It also may entail reslurrying the dry pigment in aqueous medium and then depositing the (meth)acrylic polymer thereon using, e.g. a spray dryer. As will be appreciated by those skilled in the art, a number of other final treatment processes may be used to deposit the (meth)acrylic polymer onto the surface of the titanium dioxide pigment, before isolating the pigment as a modified dry pigment powder.

The above mentioned processes to introduce the (meth)acrylic polymer of component B) can be carried out at temperatures in the range of 100 to 400 °C, preferably 250 to 400 °C, more preferably 300 to 350 °C. Surprisingly, the (meth)acrylic polymer did not degrade under the influence of temperatures of such ranges of up to 400 °C.

The resulted modified encapsulated titanium dioxide of the invention contains individual particles or loosely bound aggregates that are encapsulated with the (meth)acrylic polymer and are more readily dispersible in various enduse applications.

In certain embodiments, the modified encapsulated titanium dioxide of the present invention can be incorporated directly in enduse applications, as stir-in pigments, without requiring subsequent milling and/or without having to separately from slurries or liquid dispersions as is done with conventional pigment. In other embodiments, the modified titanium dioxide may be blended with other materials such as a liquid carrier, preservatives, and other additives under gentler conditions before being incorporated in the final application system. Examples of such systems include coating compositions, such as paints, preferably automotive, architectural or industrial paints, stoving enamels, printing inks such as ink jet inks, and paper and plastic coatings and products.

The modified encapsulated titanium dioxide of the invention is also suitable for use with macromolecular materials, e.g., synthetically produced macromolecular material such as plastic materials like polyvinyl chloride, polyvinyl acetate, polyvinyl propionate, polyolefins, high molecular weight polkyamides, polymers and copolymers of (meth) acrylates, acrylonitrile, acrylamide, butadiene, or styrene; polyurethanes; and polycarbonates, but also natural macromolecular materials such as rubber, those obtained by chemical modification, such as acetyl cellulose, cellulose butyrate, or viscose. In these enduse applications the encapsulated titanium dioxide of the invention is more readily dispersed and requires less processing time to reach desired particle size distribution or milling endpoint.

Particularly, the modified encapsulated titanium dioxide of the present invention is suitable for the use as pigments in powder coating compositions. Therefore another embodiment of this invention is a powder coating composition comprising the modified encapsulated titanium dioxide of the present invention.

The powder coating composition can be any thermal curing or radiation curing powder that is suitable for the substrate in question, comprising the known powder resin binders, cross-linking agents (hardeners, curing agents), pigments and/or additives.

The powder coating compositions of the present invention comprises at least one resin binder, optionally at least one crosslinking agent, coating additives, fillers and/or pigments known by a person skilled in the art as well as the modified titanium dioxide of the present invention.

The powder coating composition of the present invention comprises an intimate mixture of
A1) at least one film forming resin binder,
B1) 0.1 to 50 wt.%, based on total weight of the powder coating composition, of at least one modified encapsulated titanium dioxide, and
C1) at least one crosslinking agent in an effective amount to cure said powder coating composition
   wherein the components A1), B1) and C1) are not reacted prior to being mixed together.

Preferred is a powder coating composition comprising
A1) 40 to 95 wt% of at least one resin binder selected from the group consisting of polyester resins, epoxy resins, urethane resins, (meth) acrylic resins and silicone resins,
B1) 1 to 50 wt% of at least one modified encapsulated titanium dioxide, and
C1) 0 to 95 wt% of at least one cross-linking agent, the wt% amounts based on total weight of the powder coating composition.

Suitable resin binders of component A1) may be polyester resins, epoxy resins, urethane resins, (meth) acrylic resins and silicone resin.

Suitable polyesters are polyesters which can be crosslinked, for example, by free-radical polymerization and can be prepolymers, such as, polymers and oligomers, containing, per molecule, one or more, free-radically polymerizable olefinic double bonds. Unsaturated polyesters of this invention may be produced in a conventional manner by reacting polycarboxylic acids, and the anhydrides and/or esters thereof with polyalcohols, as is, for example, described in D.A. Bates, The Science of Powder Coatings, volumes 1 & 2, Gardiner House, London, 1990.

Examples of suitable polycarboxylic acids, and the anhydrides and/or esters thereof include maleic acid, fumaric acid, malonic acid, adipic acid, 1.4-cyclohexane dicarboxylic acid, isophthalic acid, terephthalic acid, acrylic acid, and their anhydride form, or mixtures thereof. Examples of suitable alcohols are benzyl alcohol, butanediol, hexanediol, diethylene glycol, pentaerytritol, neopentyl glycol, propylene glycol, and mixtures thereof.

Mixtures of carboxyl and hydroxyl group containing unsaturated polyesters may be used. The carboxy-functionalized polyesters according to the invention may have an acid value of 10 to 200 mg of KOH/g of resin and the hydroxy-functionalized polyesters may have an OH value of 10 to 200 mg of KOH/g of resin.

Epoxy resins are also usable as component A1). Examples of suitable epoxy resins are unsaturated epoxies, such as, e.g., reaction products prepared from epichlorohydrin with bisphenol, for example bisphenol A; functionalized resins such as acrylated epoxies.

Suitable (meth) acrylic resins are unsaturated resins, such as, e.g., copolymers prepared from alkyl(methacrylates with glycidyl(meth)acrylates and olefinic monomers; functionalized resins such as polyester acrylics, epoxy acrylics,urethane acrylates.

Suitable urethane resins are, e.g., unsaturated polyester urethanes, (meth) acrylic urethanes.

Preferred is the use of polyester resins and epoxy resins as component A1) according to the present invention.

The resins have a Tg (glass transition temperature) preferably in the range of, e.g., 35 to 70°C and an average molecular weight Mn in the range of, e.g., 2000 to 10.000.

The term Tg mentioned in this document is the glass transition temperature of the solid component(s) measured my means of Dynamic Mechanical Analysis (DMA) according to ASTM D7028-07e1.

The term average molecular weight Mn stated in the present description are number average molar masses determined or to be determined by gel permeation chromatography (GPC) with divinylbenzene-crosslinked polystyrene as the immobile phase, tetrahydrofuran as the liquid phase and polystyrene standards, as defined in ASTM D 3536-91.

Crystalline and/or semicrystalline resins are also usable which have a Tm (melting temperature) preferably in the range of e.g. 50 to 120°C.

The term Tm mentioned in this document is the melting temperature of the solid component(s) measured by means of DSC at heating rates of 10 K/min according to DIN 53765-B-10.

The resins of component A1) can also be at least one self crosslinkable resin containing cross-linkable functional groups, as known to those skilled in the art.

The cross-linking agent, component C1), includes conventional curing agents known to those skilled in the art, such as, for example, cycloaliphatic, aliphatic or aromatic polyisocyanates; cross-linking agents containing epoxy groups, such as, for example, triglycidyl isocyanurate (TGIC); polyglycidyl ethers based on diethylene glycol; glycidyl-functionalized (meth)acrylic copolymers; and cross-linking agents containing amino, amido, (meth)acrylate or hydroxyl groups, as well as vinyl ethers. Furthermore, conventionally cross-linking agents such as dicyanodiamide hardeners, carboxylic acid hardeners or phenolic hardeners are usable.

The powder coating compositions according to this invention may contain as further components the constituents conventional in powder coating technology, such as, degassing auxiliaries, flow-control agents, flatting agents, texturing agents, fillers, extenders, photoinitiators, catalysts, hardeners, dyes and pigments. Compounds having anti-microbial activity may also be added to the powder coating compositions.

The powder coating compositions may contain photoinitiators in order to initiate the free-radical polymerization. Suitable photoinitiators include, for example, those which absorb in the wavelength range from 190 to 600 nm. Examples for photoinitiators for free-radically curing systems are benzoin and derivatives, acetophenone and derivatives, benzophenone and derivatives, thioxanthone and derivatives, anthraquinone, organo phosphorus compounds, such as, for example, acyl phosphine oxides.

Preferably hydroxyalkyl phenones and/or acyl phosphine oxides are used as photoinitiators.

The photoinitiators are used, for example, in quantities of 0.1 to 7 wt%, relative to the total of resin solids and photoinitiators. The photoinitiators may be used individually or in combination.

The powder coating composition may additionally contain transparent, color-imparting and/or special effect-imparting pigments and/or extenders. Suitable color-imparting pigments are any conventional coating pigments of an organic or inorganic nature. Examples of inorganic or organic color-imparting pigments are titanium dioxide, micronized titanium dioxide, carbon black, azopigments, and phthalocyanine pigments. Examples of special effect-imparting pigments are metal pigments, for example, made from aluminum, copper or other metals, interference pigments, such as, metal oxide coated metal pigments and coated mica. Examples of usable extenders are silicon dioxide, aluminum silicate, barium sulfate, and calcium carbonate.

The additives are used in conventional amounts known to the person skilled in the art, for example, 0.01 to 10 wt. %, based on the total weight of the powder coating composition.

The powder coating composition may be prepared by conventional manufacturing techniques used in the powder coating industry. For example, the ingredients used in the powder coating composition, can be blended together and heated to a temperature to melt the mixture and then the mixture is extruded. The extruded material is then cooled on chill roles, broken up and then ground to a fine powder, which can be classified to the desired grain size, for example, to an average particle size of 20 to 200 µm. The powder coating composition may also be prepared by spraying from supercritical solutions, NAD "non-aqueous dispersion" processes or ultrasonic standing wave atomization process.

The term average particle size mentioned in this document is based on and means the D90 value based on the standard mentioned below. The D90 value corresponds to a particle size below which 90 weight % of the particles lie, wherein the particle size analysis is done by a laser diffraction method and meets the standards set forth in ISO 13320-1. Measurement is done on a Malvern Mastersizer 2000.

The powder coating composition of this invention may be applied by electrostatic spraying, thermal or flame spraying, or fluidized bed coating methods, all of which are known to those skilled in the art.

The coatings may be applied to non-metallic substrates as primer coat or as coating layer in a multi-layer film build.

Metallic substrates are also able to be coated with the powder coating composition according to the invention, as primer coat or as coating layer in a multi-layer film build.

In certain applications, the substrate to be coated may be pre-heated before the application of the powder, and then either heated after the application of the powder or not. For example, gas is commonly used for various heating steps, but other methods, e.g., microwaves, IR (infrared) or NIR (near infrared) irradiations are also known.

Substrates, which may be considered, are wooden substrates, wood fiber material, paper or plastic parts, for example, also fiber re-inforced plastic parts, for example, automotive and industrial bodies or body parts.

The powder coating composition according to this invention can be applied directly on the substrate surface as a primer coating or on a layer of a primer which can be a liquid or a powder based primer. The powder coating composition according to the invention can be applied as a coating layer of a multilayer coating system based on liquid or powder coats or as pigmented one-layer coat applied onto a prior coating.

The curing of the powder coating composition is possible using the curing methods well known in the art, for example, by UV (ultraviolet) irradiation and/or by thermal curing, e.g., by gas heating, IR or NIR, e.g. at a temperature in a range of 150 to 250 °C. Dual curing means a curing method of the powder coating composition according to the invention where the applied composition can be cured both by UV irradiation and by thermal curing methods known by a skilled person.

The present invention is further defined in the following Examples. It should be understood that these Examples are given by way of illustration only.

### Examples

### Pigment Encapsulation of the invention

The two polycaprolatone polymers described below were used to make encapsulated titanium dioxide pigments of the invention for which properties are reported in Table 1. The examples in which the polymers were applied to the titanium dioxide pigment during injector treatment are denoted as I.T. These encapsulated pigments were then evaluated in a powder coating formulation.

### Example I.T.1

### Pigment Encapsulation

A 2000 gram of crude white titanium dioxide (rutile) pigment (Ti-Pure®, DuPont) was processed by induction into a fast moving stream of nitrogen gas in an injector treatment device as described in US 4430001. Using this procedure a polycaprolactone polymer was intimately mixed into the pigment particles. This is accomplished by introducing into the device, concurrent with the pigment induction through the apparatus, a stream of the polycaprolactone polymer, together with a processing liquid, which gets incorporated in the induction gas and is provided at a level determined to give the optimum polymer to pigment ratio. To achieve adequate and uniform flow the polycaprolatone polymer solution solids are reduced to 20% to 30%. The total polycaprolactone polymer amount corresponds to 1 wt%, relative to the crude titanium dioxide.

The polycaprolatone polymer is based on a polyester AB block copolymer in which segment A is Desmodur®-N-ammonia and Segment B is hydroxyl polycaprolactone of Mn of 3500 g/mol.

As to the device, the Injector Treatment device used in this example was made of 1 inch schedule 40 pipe with an inside diameter of 1.049 inches. The nozzle for injection of induction gas had an inner diameter of 0.368 inches, into which a 0.25 inch outer diameter tube was inserted for injection of polymer solutions. The pigment to be treated was screw fed into the device through an attached hopper at a feed rate of 400 to 500 grams per minute. The fast moving nitrogen gas was maintained at the nozzle at a pressure of 80 psig. The injector inlet temperature was in a range of 300°C to 330 °C and the outlet temperature was 160 to 170 °C.

The resulting product was an encapsulated fine, dry white titanium dioxide pigment.

### Example I.T.2

### Pigment Encapsulation

The encapsulated titanium dioxide pigment was prepared using the same process as in Example I.T.1, except using a hyperbranched polycaprolactone polymer having Mn of 8300 g/mol. The total hyperbranched polycaprolactone polymer amount corresponds to 1.5 wt%, relative to the crude titanium dioxide.

### Example 3

### Testing in Powder Coating Compositions

The encapsulated titanium dioxide pigments of Examples I.T.1 and I.T.2 were used in a powder coating composition based on an epoxy binder resin, the powder coating composition having the following ingredients:

| **Component** | **PHR** |
|---|---|
| Epoxy resin 2002HF | 100 |
| Curing agent Epi-cureP108 | 4.5 |
| Flow agent Resiflow PL200 | 1.3 |
| Encapsulated TiO2 of Example I.T.1 respective Example I.T.2 | 75 |

Each of both powder coating composition was applied onto a metal plate with a dry film thickness of 3 µm and was cured by thermal curing at a temperature of 160 °C.

The following Table 1 shows the results of coatings based on the above formulated and tested powder coating compositions, showing improved powder coating performance using the encapsulated titanium dioxide pigments of the invention.

This is demonstrated as higher Byk DOI (distinctness of image) value. The DOI was measured with a Byk Gardner Wave Scan meter and the DOI showed a high improvement for the samples based on I.T.1 and I.T.2, which accounts for the reduction in observed orange peel. Further, the haze which was measured using a ByK Gardner Gloss meter showed a 50% reduction for powder coating panels made using the invention versus powder coating based on crude titanium dioxide. The gel plate flow test showed that the inventive coatings had better flow down a horizontal panel which accounts for better orange peel from improved flow and levelling.

**Table 1:**

| Test Results | | | | | |
|---|---|---|---|---|---|
| **Sample** | **Smoothness** | **BYK DOI** | **Gloss 20 deg.** | **Haze** | **Gel Plate Flow** |
| Powder coating composition based on crude Ti-Pure® (DuPont) | 51.6 | 44.3 | 88 | 126 | 115 |
| Powder coating composition based on Ti-Pure®(DuPont) of Example I.T.1 | 64.4 | 53.6 | 97 | 55 | 125 |
| Powder coating composition based on Ti-Pure®(DuPont) of Example I.T.2 | 64.6 | 50.8 | 98 | 62 | 130 |

## Claims

1. An encapsulated titanium dioxide comprising an intimate mixture comprising
A) crude titanium dioxide, and
B) 0.1 to 10 wt% of at least one (meth)acrylic polymer,
the wt% relative to the crude titanium dioxide,
wherein the (meth)acrylic polymer is a polycaprolactone based polymer.

2. The encapsulated titanium dioxide of claim 1 wherein the crude titanium dioxide is selected from the group consisting of of titanium dioxide made using chloride process, pigmentary titanium dioxide, transparent titanium dioxide, titanium dioxide including at least one inorganic hydrous oxide.

3. A process of preparation of the encapsulated titanium dioxide of claims 1 to 2 comprising the steps
(a) admixing the crude titanium dioxide with 0.1 to 10 wt% of at least one (meth)acrylic polymer, wherein the (meth)acrylic polymer is a polycaprolacton based polymer and optionally with one or more additives and liquids; and
(b) isolating the resulted encapsulated titanium dioxide, the wt% relative to the crude titanium dioxide.

4. The process of claim 3 wherein the (meth)acrylic polymer is introduced to the admixture at a temperature in the range of 100 to 400 °C.

5. The process of claim 3 and 4 wherein the liquid is used as carrier medium.

6. The process of claims 3 to 5 wherein the liquid is used in amounts of 10 to 50 wt%, the wt% based on the admixture being processed.

7. The process of claims 3 to 6 wherein the additives are used in quantities of 0.1 to 50 wt%, the wt% relative to the titanium dioxide.

8. A powder coating composition comprising the modified encapsulated titanium dioxide according to claim 1 or 2.

## Patentansprüche

1. Eingekapseltes Titandioxid umfassend eine innige Mischung umfassend
A) rohes Titandioxid und
B) 0,1 bis 10 Gew.% mindestens eines (Meth)acrylpolymers, wobei die Gew.-% auf das rohe Titandioxid bezogen sind,
wobei das (Meth)acrylpolymer ein Polymer auf der Basis von Polycaprolacton ist.

2. Eingekapseltes Titandioxid nach Anspruch 1, wobei das rohe Titandioxid aus der Gruppe ausgewählt ist bestehend aus unter Anwendung des Chloridverfahrens hergestelltem Titandioxid, pigmentärem Titandioxid, transparentem Titandioxid, Titandioxid, das mindestens ein anorganisches wasserhaltiges Oxid umfasst.

3. Verfahren für die Herstellung des eingekapselten Titandioxids nach den Ansprüchen 1 bis 2, umfassend die Schritte
(a) Zusammenmischen des rohen Titandioxids mit 0,1 bis 10 Gew.-% mindestens eines (Meth)acrylpolymers, wobei das (Meth)acrylpolymer ein Polymer auf der Basis von Polycaprolacton ist, und wahlweise mit einem oder mehreren Zusatzmitteln und Flüssigkeiten; und
(b) Isolieren des resultierenden eingekapselten Titandioxids, wobei die Gew.-% auf das rohe Titandioxid bezogen sind.

4. Verfahren nach Anspruch 3, wobei das (Meth)acrylpolymer in die Mischung bei einer Temperatur im Bereich von 100 bis 400 °C eingeführt wird.

5. Verfahren nach Anspruch 3 und 4, wobei die Flüssigkeit als Trägermedium verwendet wird.

6. Verfahren nach Anspruch 3 bis 5, wobei die Flüssigkeit in Mengen von 10 bis 50 Gew.-% verwendet wird, wobei die Gew.-% auf die Mischung, die verarbeitet wird, bezogen sind.

7. Verfahren nach Anspruch 3 bis 6, wobei die Zusatzmittel in Mengen von 0,1 bis 50 Gew.-% verwendet werden, wobei die Gew.-% auf das Titandioxid bezogen sind.

8. Pulverbeschichtungszusammensetzung umfassend das modifizierte eingekapselte Titandioxid nach Anspruch 1 oder 2.

## Revendications

1. Dioxyde de titane encapsulé comprenant un mélange intime comprenant
A) du dioxyde de titane brut, et
B) de 0,1 à 10 % en poids d'au moins un polymère (méth)acrylique, le % en poids étant proportionnel au dioxyde de titane brut,
le polymère (méth)acrylique étant un polymère à base de polycaprolactone.

2. Dioxyde de titane encapsulé selon la revendication 1, dans lequel le dioxyde de titane brut est choisi dans le groupe constitué par le dioxyde de titane préparé au moyen d'un procédé au chlorure, le dioxyde de titane pigmentaire, le dioxyde de titane transparent, le dioxyde de titane comprenant au moins un oxyde hydraté inorganique.

3. Procédé de préparation du dioxyde de titane encapsulé selon les revendications 1 à 2, comprenant les étapes consistant à
(a) mélanger le dioxyde de titane brut avec de 0,1 à 10 % en poids d'au moins un polymère (méth)acrylique, le polymère (méth)acrylique étant un polymère à base de polycaprolactone, et facultativement avec au moins un ou plusieurs additifs et liquides ; et
(b) isoler le dioxyde de titane encapsulé résultant, le % en poids étant proportionnel au dioxyde de titane brut.

4. Procédé selon la revendication 3, dans lequel le polymère (méth)acrylique est introduit dans le mélange à une température comprise dans la plage allant de 100 à 400 °C.

5. Procédé selon les revendications 3 et 4, dans lequel le liquide est utilisé en tant que milieu support.

6. Procédé selon les revendications 3 à 5, dans lequel le liquide est utilisé en des quantités de 10 à 50 % en poids, le % en poids étant basé sur le mélange à traiter.

7. Procédé selon les revendications 3 à 6, dans lequel les additifs sont utilisés en des quantités de 0,1 à 50 % en poids, le % en poids étant proportionnel au dioxyde de titane.

8. Composition de revêtement en poudre comprenant le dioxyde de titane encapsulé modifié selon la revendication 1 ou 2.
